# EUROPÄISCHE PATENTSCHRIFT

(11) **EP 0 616 758 B1**
(45) Veröffentlichungstag und Bekanntmachung des Hinweises auf die Patenterteilung: **27.05.1998**
(21) Anmeldenummer: 94104067.7
(22) Anmeldetag: 16.03.1994
(51) Int. Cl.: A01C 1/06

(54) **Pilliertes Saatgut mit einer vorbestimmten, einheitlichen Anzahl von Samen je Korn und Verfahren zu dessen Herstellung**
Seed pills, enclosing a pre-set number of seeds for each seed pill and method for making it
Semences enrobées comportant un nombre déterminé de graines par granulé et méthode pour la fabrication

(30) Priorität: 25.03.1993 DE 4309679
(43) Veröffentlichungstag der Anmeldung: 28.09.1994
(73) Patentinhaber: SUET Saat- und Erntetechnik GmbH, D-37269 Eschwege (DE)
(72) Erfinder: Weber, Heinrich, D-37242 Bad Sooden-Allendorf (DE); Fuss, Ernst-Otto, D-37297 Berkatal (DE)
(74) Vertreter: Freiherr von Schorlemer, Reinfried, Dipl.-Phys.

(56) Entgegenhaltungen:
- WO-A-91/01803
- DE-B- 1 103 073
- DE-U- 9 114 087
- US-A- 2 736 139

## Beschreibung

Die Erfindung betrifft ein Verfahren zur Herstellung von pilliertem Saatgut nach dem Oberbegriff des Anspuchs 1 sowie pilliertes Saatgut nach dem Oberbegriff des Anspruchs 12.

Viele Samen-Arten von Nutz- und Zierpflanzen bilden durch ihre Beschaffenheit wie Struktur, Größe und Form ungünstige Voraussetzungen für ihre Handhabung. Es ist daher schon länger bekannt, Pillen mit einem oder Granulate mit mehreren Samen je Korn durch Befeuchtung und Auftragung von Hüll- oder Streckmasse und Bindemittel zu bilden, homogen zu vergrößern und auszuformen, um die getrockneten, stabilen Körner einzeln handhaben oder auch mechanisiert aussäen zu können. Mit der Zugabe geeigneter und auf die Samenart abgestimmter Stoffe können auch die Keimung, der Aufwuchs und der Schutz der Pflanzen gefördert werden.

Das Anbringen einer exakt vorbestimmten Anzahl von Samen an einen einzigen Kern ist vor allem bei Pflanzen erwünscht, die im Horst ausgesät werden (z.B. Grassamen), die in unterschiedlichen Sorten/Arten miteinander gemischt werden sollen (z.B. Zierpflanzen), um z.B. unterschiedliche Farb- oder Duftmischungen zu erzielen, oder die eine von Art oder Ernte bedingte reduzierte Keimfähigkeit besitzen.

Bei einem bekannten Verfahren zur Herstellung von derartigem Saatgut (DE-PS 1 186 668) wird eine bestimmte Anzahl von Samen der gleichen Sorte oder verschiedener Sorten einer Art oder verschiedener Arten, insbesondere von Gräsern, Wildpflanzen, Gemüse und Zierpflanzen oder Gewürzkräutern und hier vor allem von Arten mit unregelmäßig geformten oder feinen Samen, zu einem Einzelkorn granuliert, um dadurch biologische und gärtnerische Bedürfnisse wie gegenseitigen Schutz, Horst-Bildung oder eine optisch bessere Vermarktung der Pflanzen zu fördern. Dabei werden die Samen und eine ggf. bindemittelhaltige Streckmasse homogen gemischt und befeuchtet, dann granuliert, indem sie in Zwangsmischern oder Granulatoren behandelt oder durch Lochmasken gepreßt und abgelängt und danach ausgerundet und getrocknet werden. Aus diesen Granulaten soll danach eine bestimmte einheitliche Anzahl von Pflanzen keimen, um ein statistisch nur wenig streuendes, fachgerechtes und wirtschaftliches Minimum der oft teuren und knapp verfügbaren Samen einsetzen zu können. Die Verfahren der Granulierung weisen jedoch mehrere Nachteile auf.

Der völlige Einschluß eines Anteils an Samen in Streckmasse sowie die Verdichtung der Mischung können die Keimung erheblich behindern, insbesondere wenn es sich um Licht benötigende Arten handelt. Weiter können hohe Kräfte aus Reibung, Scherung und Druck einen nicht vorhersehbaren Anteil der feuchten, labilen Samen mechanisch beschädigen, die dadurch nur als anormale Pflanzen oder gar nicht keimen. Ferner wird die Anzahl der im Granulat enthaltenen Samen durch die Größe der Granulat-Körner bestimmt, wobei die Streuung durch Inhomogenität der Mischung verstärkt werden kann. Zur Sicherstellung einer oft auch bei kleinen Körnern gewünschten Mindest-Anzahl müssen die Samen in der Mischung überdosiert werden. Größere Granulate enthalten dann stets zu viele Samen. Granulatoren oder Zwangsmischer sind daher mit Rührwerken oder Rotormessern ausgerüstet, um die zu groß gewordenen Körner zu zerkleinern, sie neu zu granulieren und dadurch die Korngrößen und die Anzahlen an Samen auszugleichen. Daraus resultieren jedoch auch zufällige Ergebnisse in der Samenzahl je Korn, eine Verlängerung des Prozesses unter Einwirkung von Feuchte auf die Samen und Beschädigungen oder Zerstörungen eines nicht vorhersehbaren Anteils an Samen. Der Ersatz dieser Anteile durch eine höhere Mischungsmenge der Samen ist nur ungenau möglich und unwirtschaftlich. Ein nach dem bekannten Verfahren (DE-PS 1 186 668) hergestelltes Granulat mit vorgegebenen ca. sieben Lobelien-Samen je Korn weist z.B. Streuungen von unter fünf bis zehn Samen je Korn auf. Durch Druck- und Scherkräfte der Lochmatrize im Granulator werden dabei bis zu 10 % an Keimfähigkeit, bei z.B. feinen Grassamen wie Agrostis noch höhere Anteile eingebüßt.

Bei anderen bekannten Verfahren, nämlich der Aufbau-Granulation oder Pillierung, werden Samen als Kerne in rotierenden Behältern wie Dragiertrommeln oder Granulatoren permanent umgewälzt und abwechselnd mit Feuchte oder gelöstem Bindemittel sowie mit pulverförmigen Stoffen, die evtl. auch mit Bindemittel versehen sind, beschichtet. Die Pillen oder Granulate werden danach schonend getrocknet, um ihre Form stabil zu erhalten und eine für die Samen qualitätserhaltende Lagerfeuchte zu erreichen.

Die Größen und Formen der Pillen können durch die Mengen- und Dosierverhältnisse von Samen, Befeuchtung, Streckmasse und Bindemittel beeinflußt werden, was aber erhebliche Nachteile für die Qualität der Samen mit sich bringen kann. Beispielsweise kann bei Pillierungen feiner Samen mit Streckmasse und Bindemittel in rotierenden Behältern die Bildung irreversibler Klumpen und Anbackungen mit Verlusten an die Behälterwand nur durch langsame Befeuchtung vermieden werden. Mit zunehmender Verfahrensdauer werden die Samen dabei jedoch länger durchfeuchtet und umgewälzt, weshalb auch die Rücktrocknung verlängert werden muß. Außerdem steigt das Risiko einer Beschädigung der feuchten Samen und Pillen durch Druck und Abrasion aufgrund von Misch- und Abrollkräften. Weiter könnten eine Verdichtung der Hülle und eine vorzeitige Alterung die Keimqualität und Vitalität der Samen mindern. Schließlich ist auch die Herstellung einer exakten einheitlichen Anzahl an Samen je Korn aufgrund gegenseitiger Agglomeration vor der Pillierung schwierig herzustellen, da in zufälliger Streuung zu groß gewordene Agglomerate mit erheblichem Risiko für die feucht labilen Samen fraktioniert, zerkleinert und neu aufgebaut werden müssen.

Es ist daher auch bereits versucht worden (EP-A1-0 543 438), ein pilliertes Produkt nach dem Oberbegriff des Anspruchs 12 mittels des Verfahrens nach dem Oberbegiff des Anspruchs 1 dadurch herzustellen, daß auf kleinen, runden Glasperlen eine einheitliche Anzahl von z.B. Lobelien-Samen zwecks Bildung einer Pille dick mit einer Streckmasse umhüllt wird. Auswaschversuche mit diesem Produkt zeigen jedoch breite Streuungen von 0 bis 25 Samen je Korn. Dieser Nachteil rührt, auch bei homogener Mischung der Samen mit Streckmasse und Bindemittel vor der Pillierung, von ungeeigneten Verfahrensmaßnahmen her.

Eine direkte Aufpillierung auf Glasperlen-Kerne, Sand und andere Kerne mit glatten Oberflächen dürfte vor allem bei großen Feinheiten, z.B. je nach Sorte ca. 30.000 Lobelien- oder gar 40.000 bis über 80.000 Begonien-Samen je Gramm oder je 1,5 Milliliter, bereits daran scheitern, daß sich die Samen weder manuell noch mechanisiert gleichmäßig genug dosieren oder verteilen lassen. Wegen der zu geringen Bandbreite der Befeuchtung bis zur Überfeuchtung, selbst mit nur geringen Teilmengen und Dosierungen, ist die Pillierung auf Glasperlen od. dgl. sehr schwierig. Die glatten und stark gewölbten Oberflächen der kleinen Kerne bieten, wenn sie mit geringer Wasser- oder Bindemittelmenge langsam befeuchtet werden, nur geringe Haftflächen und Bindekräfte. Sie lassen die Samen mit Streckmasse ungleichmäßig anlagern und wieder abstreifen. Noch feuchte Oberflächen entziehen den bereits trockenen ihre Bedeckung und wachsen dadurch inhomogen. Abgestreifte und miteinander agglomerierte Partikel werden nicht wieder an die Oberfläche angelagert. Erfolgt die Befeuchtung dagegen schnell, werden Samen und Streckmasse von den glatten Oberflächen sofort abgeschwemmt. Außerdem bilden sie untereinander schnell größere Agglomerate mit inhomogenen Korngrößen und Anhaftungen an die Behälterwand, was auch bei Reinigung, Zerkleinerung und Recycling zu Samenverlusten führt. Ein weiterer Nachteil von kleinen Kernen wie Glasperlen ergibt sich aus ihrer hohen Dichte gegenüber den Samen, da sie aufgrund hoher Abwälzkräfte und geringer Auflageflächen nicht nur großen Druck und Abrasion auf die Samen ausüben, sondern auch eine Trennung von nicht angelagerten und dadurch aufschwimmenden Samen und Streckmasse bewirken. Samen von wichtigen Arten haben außerdem oft eine längliche Form und stehen an runden Kernen über. Die nicht schon anfangs abgestreiften Samen können daher nur mit einem höheren Verbrauch an Streckmasse entsprechend dick pilliert und dauerhaft gebunden werden, wodurch ihre Keimung gefährdet ist.

Angesichts dieser Problematik liegt der Erfindung die Aufgabe zugrunde, ein verbessertes pilliertes Saatgut mit einer vorbestimmten, einheitlichen Anzahl von Samen je Korn und ein Verfahren zu dessen Herstellung vorzuschlagen, das schnell, schonend und weitgehend verlustfrei zu einem pillierten Saatgut mit einer genauer als bisher vorbestimmbaren, einheitlichen Anzahl von Samen je Korn führt.

Zur Lösung dieser Aufgabe dienen die kennzeichnenden Merkmale der Ansprüche 1 und 12.

Weitere vorteilhafte Merkmale der Erfindung ergeben sich aus den Unteransprüchen.

Die Erfindung wird nachfolgend in Verbindung mit der beiliegenden Zeichnung an zwei Ausführungsbeispielen näher erläutert. Es zeigen:
- Fig. 1: schematisch ein erfindungsgemäß pilliertes Korn aus einem im wesentlichen sphärischen Kern und kleinen, rund-ovalen Samen; und
- Fig. 2: schematisch ein erfindungsgemäß pilliertes Korn aus einem im wesentlichen länglichen Kern und stäbchenförmigen Samen.

Das erfindungsgemäße Verfahren beruht auf der Erkenntnis, daß die Anlagerung einer bestimmten Anzahl von Samen an den Kern in einer - statistisch betrachtet - weitgehend einheitlichen Weise, d.h. mit geringer Streuung dadurch möglich ist, daß die Kerne unter Berücksichtigung von Eigenschaften der Samen ausgewählt, hergestellt und/oder vorbehandelt werden, indem z.B. ihre Form an die Form der Samen angepaßt oder ihre Oberfläche entsprechend vorbehandelt bzw. konditioniert wird. Die eigentliche Anlagerung der Samen an die Kerne erfolgt dadurch, daß eine vorbestimmte Anzahl der Kerne abwechselnd und in Teilmengen mit einer homogenen Mischung aus einer exakt bestimmten Anzahl von Samen und einer bestimmten Menge an Streckmasse, die bei Bedarf Bindemittel enthalten kann, sowie mit bestimmten Mengen eines Befeuchtungsmittels, das bei Bedarf ebenfalls Bindemittel enthalten kann, durch Umwälzung in einem Behälter schnell und schonend beschichtet wird. Anschließend werden die erhaltenen Pillen in bei der Pillierung an sich bekannter Weise schnell und schonend getrocknet, um die Pillen in einer stabilen Form zu erhärten und eine für die Samen erforderliche Mindest-Lagerfeuchte zu erreichen.

Unter "schneller und schonender" Umwälzung der Kerne und der Mischung bzw. des Befeuchtungsmittels im Behälter wird hier verstanden, daß die Umwälzung zwar mit hoher Drehzahl in einem Behälter, z.B. in einer Dragiertrommel, einem Rotor-Granulator, einer rotierenden/rollenden Trommel od. dgl., aber ohne zusätzliche Anwendung von Rühr-, Schneid- oder Schlagwerkzeugen od. dgl. erfolgt, die eine teilweise oder vollständige Beschädigung der Kerne oder der Samen bewirken könnten. Die Kerne und Samen sollen vielmehr zwanglos aneinander abrollen und dadurch ihre natürliche Ausrichtung erhalten, z.B. in dem Sinne, daß die Samen, wenn sie länglich sind, auf ihrer ganzen Länge an den Kern angelegt werden, was die Gefahr des Abstreifens reduziert. Dabei werden die Teilmengen und Geschwindigkeiten der Befeuchtungen und Pulverdosierungen vorzugsweise so gewählt, daß die mit der Füllmenge der Kerne in Abhängigkeit von der Behältergröße und dessen Drehzahl eingestellte, gleichmäßige Umwälzung bei der gesamten Beschichtung erhalten bleibt und weder durch Überfeuchtung der Oberflächen in Stockung gerät noch überschüssige Streckmasse aufschwimmt, und daß mit den Samen oder Streckmassen keine Agglomerate untereinander oder an der Behälterwand gebildet werden.

Das Mischungsverhältnis von Samen, Streckmasse und Kernen sowie die Art bzw. Geschwindigkeit der Befeuchtung bei der Beschichtung wird erfindungsgemäß so gewählt, daß die ggf. mit einer Hüllmasse vorbehandelten Oberflächen der Kerne nach jeder Benetzung, insbesondere mit Wasser, das ggf. mit einem darin gelösten Bindemittel versehen ist, die erforderliche Feuchte und Klebrigkeit erhält, um eine bestimmte Teilmenge der Mischung gleichmäßig anlagern und binden zu können. Dabei wird außerdem das Mischungsverhältnis von Samen zu Streckmasse so gewählt, daß die an den Kernen angelagerten Samen sicher und fest in die Streckmasse eingebettet sind und daher weder ohne weiteres abgestreift werden können noch untereinander agglomerieren oder an der Behälterwand abgelegt werden.

Bei der Verarbeitung von zur Keimung Lichtzutritt benötigenden Samen wird das Verhältnis von Samen zu Streckmasse mit besonderem Vorteil so gewählt, daß die Samen zwar sicher in die Streckmasse eingebettet, aber nicht völlig von ihr überdeckt werden und dadurch in ihrer Keimung nicht behindert sind. Dabei wird die Einbettung der Samen auf den Kernen zweckmäßig bis zu einer ihrer Dicke entsprechenden Höhe vorgenommen, damit die oberen Oberflächen der Samen frei bleiben.

Im übrigen beruht die Erfindung auf der Erkenntnis, daß sich das erfindungsgemäße Verfahren dann optimal durchführen läßt, wenn die Art und die Oberfläche der Kerne sowie die Art und die Menge der Streckmasse auf die im Einzelfall vorhandene Form, Größe und Anzahl der Samen abgestimmt werden.

Die wesentlichen Vorteile der Erfindung bestehen darin, daß durch die abgestimmte Anwendung von Kernen, Streckmassen und Samen die Anlagerung einer vorbestimmten Anzahl von Samen mit hoher Genauigkeit und Festigkeit möglich ist, keine Überdosierung benötigt wird, keine mehr oder weniger unbekannten Verluste an Samen während der Herstellung auftreten und eine Zerstörung der Samen bei der Herstellung weitgehend vermieden werden kann.

Eine "Auswahl" von Kernen im Sinne der Erfindung erfolgt beispielsweise dadurch, daß Kerne aus organischem Material mit geringer, etwa der Dichte der Samen entsprechenden Dichte verwendet werden, z.B. Kerne aus Samen/Früchten mit Dichten um 1 kg/Liter, insbesondere um 0,6 bis 0,8 kg/Liter. Als Beispiele seien hier Fraktionen von Reiskörnern, kornfreien Maiskolben und Beta-Knäulen (Holzkörper von Rübensamen), aber auch vermahlener Kork oder Fraktionen von Weichholzmehl od. dgl. genannt.

Im Hinblick auf die Auswahl der Kerne geht die Erfindung weiter davon aus, daß z.B. Kerne mit Oberflächen gewählt werden, die entsprechend den Dimensionen der Samen bemessene Kavernen, Höhlungen od. dgl. aufweisen oder in anderer Weise zerklüftet sind, was die Anlagerung der Samen, insbesondere bei Anwendung von kleinen, rundlich-ovalen Samen, erleichtert. Außerdem sollte die Oberflächenbeschaffenheit der Kerne so gewählt sein, daß die Oberfläche die zum Anlagern der Samen erforderliche Feuchte (ggf. mit Bindemittel) aufnehmen kann, indem sie z.B. ausreichend sorbierend, porös und/oder hydrophil ist, um dadurch eine statistisch gute, gleichmäßige Verteilung der Samen zu ermöglichen.

Unter "Herstellung" der Kerne im Sinne der Erfindung wird insbesondere die Herstellung von Kernen vorbestimmter Größe verstanden, was z.B. durch Vermahlung mit geeigneten Mühlen und nachfolgender Fraktionierung erfolgen kann. Handelt es sich um die Anlagerung von kleinen, runden oder ovalen Samen, z.B. Alyssum, werden als Ausgangsmaterialien für die Kerne z.B. Maiskolben oder zerklüftete Beta-Knäule gewählt, die vor dem Beginn der Pillierung vermahlen und fraktioniert werden. Dadurch werden porige, zerklüftete, rauhe Oberflächen erhalten, die insbesondere kleine, runde und ovale Samen gut anlagern bzw. mit nur wenig Feuchte und Streckmasse fixieren und einbetten können. Handelt es sich dagegen um längliche bzw. stäbchenförmige Samen, z.B. Thymophylla, dann erfolgt die Kernherstellung bevorzugt durch die Fraktionierung größerer, ebenfalls länglicher Kerne wie z.B. von Reis, an denen sich die Samen beim gemeinsamen Abwälzen ausrichten und dadurch dicht an ihren Oberflächen anliegen und nicht über deren Konturen hinausstehen.

Die Größe der Kerne sollte derart gewählt werden, daß das Volumenverhältnis Kern zu Samen ausreichend groß ist und z.B. 2 : 1 bis 10 : 1 beträgt. Außerdem sollte das Volumenverhältnis statistisch keine zu großen Schwankungen aufweisen, damit die Größe der Kernoberfläche und die Zahl und die Größe der angelagerten Samen in einem abgestimmten Verhältnis stehen. Im Einzelfall geeignete Verhältnisse können im übrigen leicht durch Versuche ermittelt werden. Insgesamt sollten die Kerne um so viel größer als die Samen sein, daß die gewünschte Anlagerung ohne große, das ungewollte Abstreifen ermöglichende Überstände der Samen über die äußeren Konturen der Kerne erfolgt. Bei Anwendung länglicher Samen sollten daher Kerne gewählt oder hergestellt werden, die eine etwa zwei- bis fünfmal größere Länge als die Samen aufweisen.

Eine "Vorbehandlung" der Kerne findet im Sinne der Erfindung vorzugsweise dadurch statt, daß die Oberflächen der Kerne zur Aufnahme der Samen vorbereitet wird. Im Falle von glatten Kernen, z.B. Reiskorn-Fraktionen, besteht die Vorbehandlung z.B. darin, daß die Kernoberfläche vor der Pillierung mit einer bestimmten Menge einer geeigneten Hüllmasse ohne Samen beschichtet wird, um sie gleichmäßig zu bedecken. Dadurch wird eine Schicht erzeugt, die eine gleichmäßigere Auftragung, Pufferung der Befeuchtung und Anbindung der Mischung aus Samen und Streckmasse gestattet. Die Beschichtung erfolgt zweckmäßig in Teilmengen und im Wechsel mit einem Befeuchtungsmittel, z.B. Wasser, das ggf. mit Bindemittel angereichert sein kann. Außerdem dient die Hüllmasse bei Bedarf dazu, die Haftfähigkeit der Kernoberfläche zu verbessern, was z.B. bei den sehr glatten Oberflächen von Reiskörnern zweckmäßig ist, oder die Oberflächenform der Kerne zu begradigen, wenn z.B. längliche Samen angebunden werden sollen.

Eine andere Art der Vorbehandlung kann darin bestehen, daß die Kerne vor ihrer Beschichtung desinfiziert oder sterilisiert werden, insbesondere bei Anwendung von natürlichen Materialien. Dadurch werden auf den Kernen in vorteilhafter Weise schädliche Mikroorganismen wie Bakterien, Pilze od. dgl. genügend reduziert.

Schließlich kann eine Vorbehandlung auch im Schleifen und Brechen von Kernen vor der Fraktionierung bestehen. Eine solche Behandlung kann zweckmäßig sein, um die Kalibrierung der Kerne zu verbessern.

Als Streckmasse werden beim erfindungsgemäßen Verfahren feine Gesteinsmehle bevorzugt, wie sie zur Pillierung einzelner feiner Samen gebräuchlich sind, weil sich hierdurch homogene Mischungen mit Samen und bei der nachfolgenden Pillierung homogene Beschichtungen erzielen lassen, in die die Samen gleichmäßig eingebettet sind. Besonders bevorzugt wird ein feines Gesteinsmehl mit einer Körnung < 50 µm verwendet.

Auch als Hüllmasse eignen sich die zur Pillierung feiner Samen üblichen Gesteinsmehle mit einer bevorzugten Körnung < 10 µm.

Als Bindemittel können bei der Pillierung an sich bekannte Lösungen, aber auch Stärke, Zucker od. dgl. dienen. In manchen Fällen genügt auch die Anwendung von Wasser, das gleichzeitig als Befeuchtungsmittel verwendet werden kann.

Die im Einzelfall verwendete Menge an Streckmasse wird nach der Art und Form der Kerne und ihrer Oberflächen sowie der Samen so bestimmt, daß die Streckmasse die Kernoberflächen vorzugsweise in einer geschlossenen Schicht und höchstens bis zur Dicke der Samen überdeckt, damit deren Oberflächen frei bleiben, wenn Lichtzutritt erforderlich ist. Ist kein Lichtzutritt erforderlich, kann die Streckmasse die Samen auch geringfügig, vorzugsweise jedoch nur sehr wenig, überdecken.

Die Mischung der Streckmasse mit der bestimmten Anzahl von Samen erfolgt vorzugsweise mit Pflugschar- oder Taumelmischern.

Durch die beschriebenen Maßnahmen wird zur Beschichtung der Kerne nur eine sehr kleine Menge an Streckmasse benötigt, um damit eine einheitliche Anzahl von Samen an die Oberflächen aller Kerne gleichmäßig zu verteilen und einzubetten. Dadurch wird außerdem der zur Anbindung an die Kerne nötige Wasser- und Bindemittelgehalt keimungsfördernd reduziert. Bei der Begrenzung der Streckmassenschicht auf die Dicke der Samen keimen die besonders Lichtzutritt benötigenden Arten schneller ohne weitere Hilfsmittel. Weiterhin können die Befeuchtung der Kerne mit behandelter Oberfläche, ihre Beschichtung mit vorgemischten Samen und Streckmasse sowie die Trocknung der geringen Feuchte im Vergleich zu Verfahren nach dem Stand der Technik sehr gleichmäßig, schnell und schonend erfolgen. Dadurch ist die Gefährdung der Samen durch mechanische Einwirkung oder durch lange Verweilzeit in Feuchte weit geringer, und eine Überdosierung wegen unbekannter Streuungen oder Verluste der Samen ist nicht erforderlich. Schließlich wird dadurch auch die korrekte Einhaltung der bestimmten Mischungsverhältnisse aus Samen verschiedener Sorten oder Arten auf einem Korn ermöglicht, da keine Samen von bevorzugt nur einer Sorte oder Art beschädigt oder verloren werden. Da außerdem durch das Verfahren der Erfindung kaum die Samen-Keimfähigkeit beeinträchtigt wird, genügt die Berechnung der Anzahl der zu verwendenden Samen an einem Korn mit der vorher festgestellten Keimfähigkeit zur Vorherbestimmung der Anzahl der keimenden Pflanzen pro Korn.

Die höhere Kapazität der Apparate und die Ersparnis an Material und Samen-Verlusten erhöhen die Wirtschaftlichkeit des Verfahrens nach der Erfindung erheblich. Dadurch wird auch die Entmischung von verschiedenfarbig abgestimmten oder sich gegenseitig schützenden Pflanzen vermieden.

Nachfolgend werden zwei Beispiele angegeben, aus denen die vorteilhafte Herstellung und die Eigenschaften der Produkte nach der vorliegenden Erfindung ersichtlich sind.

### Beispiel 1

Es wird die erfindungsgemäße Herstellung von pillierten Körnern mit Kernen aus gemahlenen, fraktionierten Zuckerrüben-Knäulen und Samen aus rund-ovalen Scheibchen des Alyssum-Samens beschrieben.

### Ausgangsmaterialien

- Samen:: Alyssum, rund-ovaler Durchmesser max. 1,5 mm, Dicke ca. 0,2 mm, Tausend-Korn-Gewicht (TKG) 0,332 g, Keimfähigkeit 83,75 %;
- Kerne:: Knäule von Zuckerrüben-Samen, Urfraktion 3,0 bis 5,5 mm;
- Streckmasse:: zur Pillierung übliches Gesteinsmehl < 50 µm Korngröße;
- Befeuchtungsmittel:: 5-%ige wässrige Lösung von Polyviol (Polyviol = eingetragenes Warenzeichen der Fa. Wacker Chemie GmbH, 8000 München).

Die Herstellung der Kerne erfolgt durch Mahlung in einem "Jetpearler" der Fa. Steckel & Schrader KG, D-2000 Hamburg 70, und durch Fraktionierung mit einem 3,75 bis 4,00 mm Rundlochsieb (TKG 10,5 g). Die Klüfte bzw. Spalten in den Oberflächen entsprechen etwa dem Format der Alyssum-Samen. Außerdem erfolgt eine Vorbehandlung durch Sterilisierung mit Heißdampf 3 bar/1 Std. in einem Drucktopf.

Zur Pillierung wird eine Dragiertrommel D = 350 mm in Verbindung mit der Schlauchpumpe PA-SF der Fa. IKA-Labortechnik Janke & Kunkel GmbH & Co. KG, D-7813 Staufen mit einer Zweistoffdüse mit Innendurchmesser 1,2 mm zur Befeuchtung verwendet. Zur manuellen Dosierung der Samen-Streckmasse werden eine Schaufel und ein Schaber verwendet.

Die Durchführung des erfindungsgemäßen Verfahrens erfolgt in folgenden Schritten:
- Es werden 95.238 Körner Rübenknäule (1 kg) mit je fünf bis sechs Samen pilliert: 95.238 x 5,5 x 0,332 g : 1.000 = 173,9 g oder 523.809 Samen je Kilogramm Kerne.
- Ca. 250 g Streckmasse, die auf 1 kg Rübenknäule-Fraktion eine durchschnittlich 0,2 mm dünne, geschlossene Beschichtung ergeben, werden mit den 173,9 g Alyssum-Samen im Labor-Mischer homogen zu ca. 424 g gemischt.
- Die Kerne werden in die Dragiertrommel eingefüllt und in dieser mit ca. 14 U.p.M. umgewälzt. Die Kerne werden dabei abwechselnd mit dem Befeuchtungsmittel und der Samen/Streckmittel-Mischung beschichtet, indem diese in 20 etwa gleichen Portionen (Teilmengen) abgemessen und mit folgenden Dosiergeschwindigkeiten bzw. Dosierraten zugeführt werden:
   - Dosierung der Lösung:: 20 x 2,5 ml in jeweils 0,5 Min. = 50 ml in total ca. 10 Min,
   - Dosierung der Mischung:: 20 x 21,2 g in jeweils 1,0 Min. = 424 g in total ca. 20 Min.

Mit den Zwischen-Wartezeiten der einzelnen Dosierungen, Einfüllung, Nachlaufzeit ohne Dosierung und Dechargierung dauert die Beschichtung 40 Minuten. Die zusätzlichen ca. 4 % Feuchte der Körner werden auf einem Labor-Fließbett bei 25 °C in 15 Minuten schonend zurückgetrocknet.

### Qualitäts-Ergebnis Samen:

Nach vollständigem Abwaschen der Beschichtung und ihrer Verdünnung bis zur Transparenz auf einer mit Silikonraupen segmentierten Glasscheibe ergab sich aus 4 x 20 zufällig ausgewählten Körnern ein mittlerer Gehalt von 5,65 Samen je Korn, mit einer Streuung von 0,67 (Standardabweichung).

### Qualitäts-Ergebnis Pflanzen:

Nach kulturgerechter Einkeimung von 4 x 100 Korn ergaben sich im Mittel 4,65 Pflanzen je Korn, die bezogen auf 5,65 Samen = 82 % sehr gut mit der Keimfähigkeit der unverarbeiteten Samen von ca. 84 % korrespondieren.

Ein Granulat nach dem Stand der Technik zeigte nur 75 % gekeimte Pflanzen bei einem mittleren Gehalt von 4,40 Samen je Korn und mit einer Streuung von 1,83.

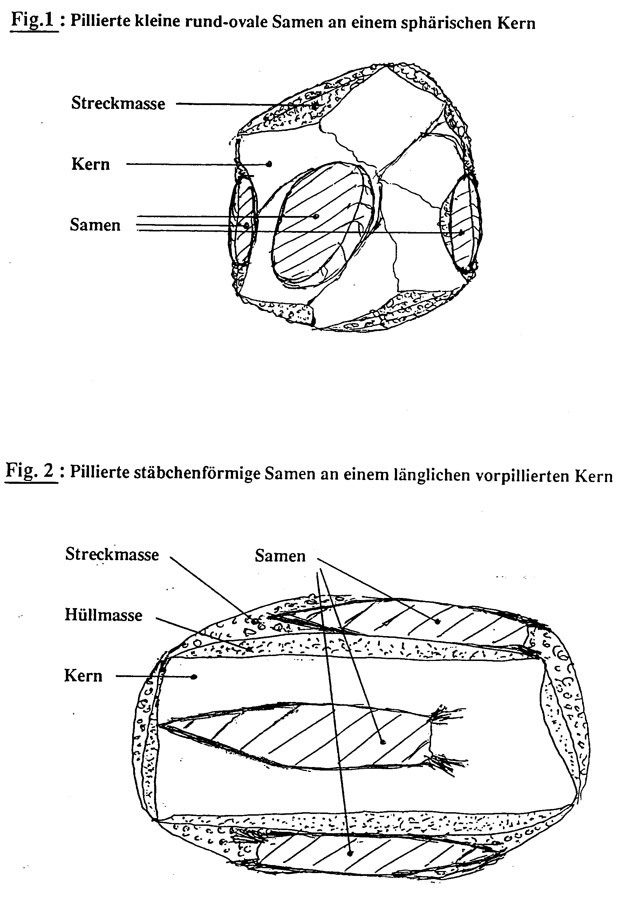

Die erhaltenen Körner sind schematisch in Fig. 1 dargestellt, woraus sich ergibt, daß die Streckmasse gerade die Zwischenräume zwischen den der Kornoberfläche anliegenden Samen ausfüllt, deren Oberfläche aber frei läßt.

### Beispiel 2

Es wird die erfindungsgemäße Herstellung von pillierten Körnern mit Kernen aus fraktionierten Reiskörnern und Samen aus länglichen Stäbchen der Thymophylla-Samen beschrieben.

### Ausgangsmedien:

- Hüllmasse:: zur Pillierung übliches Gesteinsmehl, Körnung < 10µm;
- Streckmasse:: Gesteinsmehl wie in Beispiel 1;
- Samen:: Thymophylla, Stäbchen der Länge ca. 2 mm, Dicke ca. 0,5 mm, Tausend-Korn-Gewicht (TKG) 0,143 g, Keimfähigkeit 80,6 %;
- Kerne:: Langkorn-Reis, "Parboiled";
- Befeuchtungsmittel:: wie in Beispiel 1.

Die Herstellung der Kerne erfolgt dadurch, daß eine Fraktionierung mit einem ca. 6 x 2,5 mm Schlitzlochsieb (TKG 19,2 g) durchgeführt wird. Danach werden die Kerne einer Vorbehandlung unterzogen, indem zunächst 160 g Hüllmasse (ohne Samen) und 50 ml Befeuchtungsmittel wechselweise in Teilmengen anpilliert werden. Nach Beendigung dieses Verfahrensschrittes erfolgt die Pillierung der Samen/Streckmasse-Mischung.

Zur Anpillierung der Hüllmasse und der Samen werden die Dragiertrommel, Schlauchpumpe, Düse, Schaufel und Schaber nach Beispiel 1 verwendet.

Die Durchführung des erfindungsgemäßen Verfahrens erfolgt in folgenden Schritten:
- Es werden in einem ersten Schritt 52.083 Kerne (1 kg) mit 160 g Hüllmasse bis zu einer durchschnittlich etwa 0,2 mm dünnen, gleichmäßigen Schicht belegt.
- Die Kerne werden dann in einem zweiten Schritt mit je vier bis fünf Samen pilliert: 52.083 x 4,5 x 0,143: 1.000 = 33,5 g oder 234.375 Samen je kg Kerne.
- Ca. 250 g Streckmasse, die auf 1 kg Reiskorn-Fraktion eine durchschnittlich 0,4 mm dünne, geschlossene Beschichtung ergeben, werden mit den 33,5 g Thymophylla-Samen im Labor-Mischer homogen zu ca. 284 g gemischt.
- Die Kerne werden in die Dragiertrommel gefüllt und in dieser mit ca. 14 U.p.M umgewälzt.
- Die Kerne werden im ersten Schritt abwechselnd mit dem Befeuchtungsmittel und der Hüllmasse beschichtet, indem diese in 20 etwa gleichen Teilmengen abgemessen und mit folgenden Dosiergeschwindigkeiten zugeführt werden:
   - Dosierung der Lösung:: 20 x 2,5 ml in jeweils 0,5 Min. = 50 ml in total ca. 10 Min.,
   - Dosierung Hüllmasse:: 20 x 8,0 g in jeweils 0,5 Min. = 160 g in total ca. 10 Min.
- Die Kerne werden anschließend im zweiten Schritt abwechselnd mit dem Befeuchtungsmittel und der Mischung beschichtet, indem diese in 20 etwa gleichen Teilmengen abgemessen und mit folgenden Dosiergeschwindigkeiten zugeführt werden:
   - Dosierung der Lösung:: 20 x 4,0 ml in jeweils 0,5 Min. = 80 ml in total ca. 10 Min.;
   - Dosierung der Mischung:: 20 x 14,2 g in jeweils 1,0 Min. = 284 g in total ca. 20 Min.
- Falls nach diesem Schritt noch Samen zu frei auf der Oberfläche der Körner liegen, kann deren Einbettung mit höchstens weiteren 100 g Streckmasse ohne Samen und dazu 40 ml Befeuchtungsmittel in gleichem Wechsel wie oben verbessert werden.

Insgesamt dauert die Beschichtung etwa eine Stunde. Die zusätzlichen ca. 10 - 15 % Feuchte der Körner werden bei 25 °C in 20 bis 30 Minuten zurückgetrocknet.

### Qualitäts-Ergebnis Samen:

Die auf den Kernen noch gut sichtbaren Samen zeigen bei 100 zufällig gewählten Zählungen einen mittleren Gehalt von 4,45 Samen je Korn mit einer Streuung von 1,26.

### Qualitäts-Ergebnis Pflanzen:

Nach kulturgerechter Einkeimung von 4 x 100 Korn ergaben sich im Mittel 3,50 Pflanzen je Korn, die bezogen auf 4,45 Samen = 78 % sehr gut mit der Keimfähigkeit der unverarbeiteten Samen von ca. 80 % korrespondieren.

Ein Granulat nach dem Stand der Technik zeigte aufgrund von Quetschungen oder Scherungen bei der Extrudierung durchschnittlich nur ca. zwei heile Samen je Korn. Pillen nach dem Stand der Technik waren auf sphärischen oder glatten Kernen wie Glasperlen nur schwierig zu erzeugen. Die Pillierung solcher Kerne führte nur zu ihrer teilweisen Beschichtung und zum Abstreifen der Samen, die sich dabei mit Streckmasse an die Trommelwand an- oder beliebig zu Agglomeraten zusammenlegten.

Die erhaltenen Körner sind schematisch in Fig. 2 dargestellt, woraus sich ergibt, daß die Hüllmasse dazu dient, die Kerne zur Aufnahme der Samen vorzubereiten, während die Streckmasse wie beim Beispiel 1 die Zwischenräume zwischen den angelagerten Samen ausfüllt, deren Oberflächen aber frei läßt.

Die Ergebnisse dieser Beispiele zeigen die deutliche Überlegenheit der Erfindung. Es versteht sich jedoch, daß die Erfindung nicht auf die Anwendung der beschriebenen Apparatur beschränkt ist. Dasselbe gilt vor allem auch für die Ausgangsmedien. Die Samen des bevorzugt mit dem erfindungsgemäßen Verfahren hergestellten Saatguts sind im Anspruch 12 angegeben.

## Patentansprüche

1. Verfahren zur Herstellung von pilliertem Saatgut mit einer Anzahl von Samen je Korn, bei dem eine homogene Mischung aus einer bestimmten Anzahl von Samen und einer bestimmten Menge an Streckmasse hergestellt wird, eine vorbestimmte Anzahl der Kerne durch Umwälzung in einem Behälter schnell und schonend mit einer bestimmten Menge der Mischung beschichtet wird, indem die Kerne in den Behälter gefüllt und im Wechsel Teilmengen der Mischung und Teilmengen eines Befeuchtungsmittels dosiert in den Behälter gegeben werden, wobei die Anzahl der Samen und die Menge der Streckmasse in der Mischung so aufeinander abgestimmt werden, daß die Samen in einem in Streckmasse eingebetteten Zustand an die Kerne angelagert werden, und die dadurch erhaltenen Pillen getrocknet werden, dadurch gekennzeichnet, daß vorbestimmte, einheitliche Anzahlen von Samen je Korn dadurch abstreifsicher an die Kerne angelagert werden, daß Kerne mit Oberflächen verwendet werden, die ausreichend viele und/oder große Poren oder Klüfte aufweisen, und daß die Kerne unter Berücksichtigung der Eigenschaften der Samen ausgewählt und/oder hergestellt und/oder vorbehandelt werden.

2. Verfahren nach Anspruch 1, dadurch gekennzeichnet, daß die Anzahl der Samen und die Menge der Streckmasse so aufeinander abgestimmt werden, daß die äußeren Oberflächen der Samen im eingebetteten Zustand freibleiben.

3. Verfahren nach Anspruch 1 oder 2, dadurch gekennzeichnet, daß die Vorbehandlung der Kerne durch Desinfektion oder Sterilisierung vor der Beschichtung erfolgt.

4. Verfahren nach einem der Ansprüche 1 bis 3, dadurch gekennzeichnet, daß die Herstellung der Kerne so erfolgt, daß ihre Form an die Form der Samen angepaßt wird.

5. Verfahren nach einem der Ansprüche 1 bis 4, dadurch gekennzeichnet, daß die Herstellung der Kerne durch Vermahlung und Fraktionierung erfolgt.

6. Verfahren nach einem der Ansprüche 1 bis 5, dadurch gekennzeichnet, daß die Vorbehandlung der Kerne durch Beschichtung mit einer ggf. mit einem Bindemittel versetzten Hüllmasse erfolgt.

7. Verfahren nach einem der Ansprüche 1 bis 6, dadurch gekennzeichnet, daß die Dosierung der Teilmengen in Abhängigkeit von der Behältergröße und der Umwälzgeschwindigkeit so gewählt wird, daß während der gesamten Beschichtung eine gleichförmige Umwälzung der Masse erhalten wird.

8. Verfahren nach einem der Ansprüche 1 bis 7, dadurch gekennzeichnet, daß die Menge an Streckmasse in der Mischung so gewählt wird, daß die Samen während der Beschichtung nur teilweise eingebettet werden, und daß danach abwechselnd weitere Teilmengen an Streckmasse und Befeuchtungsmittel aufgetragen werden.

9. Verfahren nach einem der Ansprüche 1 bis 8, dadurch gekennzeichnet, daß der Streckmasse und/oder dem Befeuchtungsmittel ein Bindemittel zugesetzt wird.

10. Verfahren nach einem der Ansprüche 1 bis 9, dadurch gekennzeichnet, daß das pillierte Saatgut nach der Beschichtung zur Trocknung bevorzugt in einen Fließbett-Trockner umgefüllt und bei schonender Temperatur von beispielsweise 25 °C so lange getrocknet wird, daß unter stabiler Erhärtung seiner Beschichtung und Form eine Reduzierung seiner Feuchte auf den ursprünglichen Gehalt der Samen oder darunter erfolgt.

11. Verfahren nach einem der Ansprüche 1 bis 10, dadurch gekennzeichnet, daß die bevorzugten Samen des pillierten Saatgutes folgender Liste entstammen:

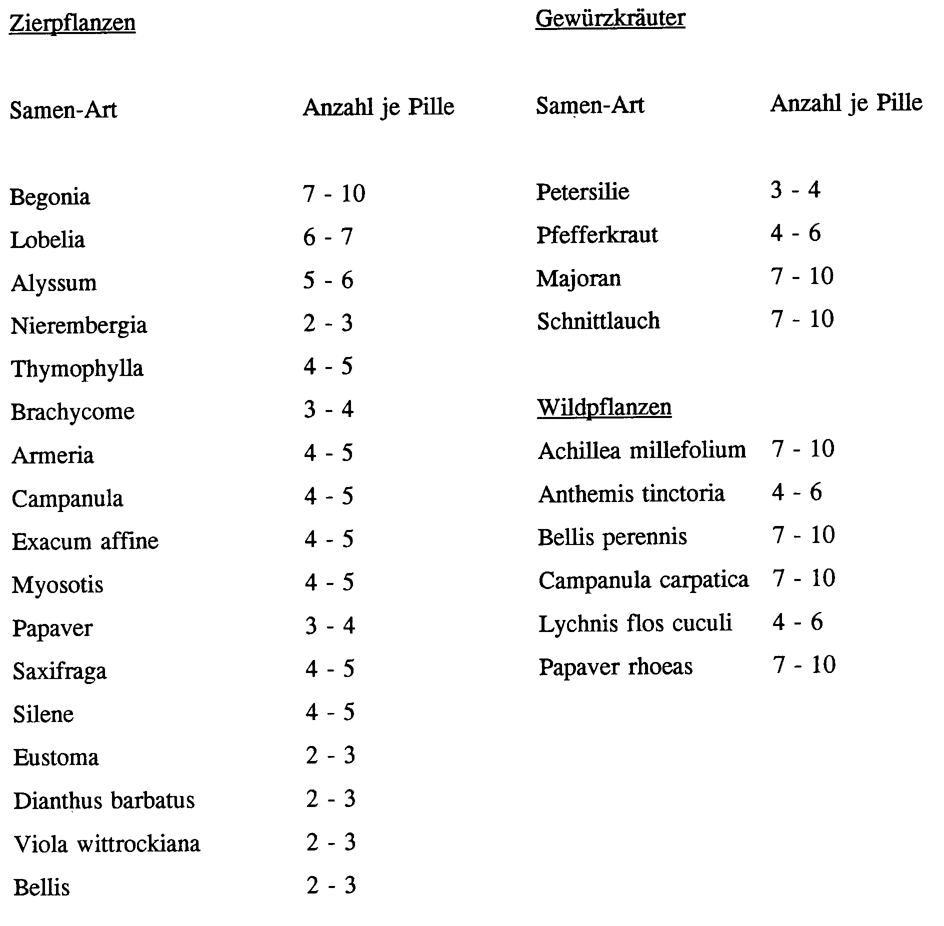

12. Pilliertes Saatgut mit einer Anzahl von Samen je Korn, bestehend aus Kernen und aus Samen, die in eine an die Oberfläche der Kerne haftenden Streckmasse eingebettet sind, dadurch gekennzeichnet, daß die Kerne unter Berücksichtigung der Eigenschaften der Samen ausgewählt und/oder hergestellt und/oder vorbehandelt sind und ihre Oberflächen so viele und/oder so große Poren oder Klüfte aufweisen, daß eine vorbestimmte, einheitliche Anzahl von Samen abstreifsicher an die Kerne angelagert ist.

13. Saatgut nach Anspruch 12, dadurch gekennzeichnet, daß die Samen so in die Streckmasse eingebettet sind, daß ihre äußeren Oberflächen freibleiben.

14. Saatgut nach Anspruch 12 bis 13, dadurch gekennzeichnet, daß die Form der Kerne an die Form der Samen angepaßt ist.

15. Saatgut nach einem der Ansprüche 12 bis 14, dadurch gekennzeichnet, daß die Kerne mit einer Hüllmasse beschichtet sind.

## Claims

1. Method of manufacturing pelletised seeds with a number of seeds pet granule, in which a homogenous mixture is produced of a specific number of seeds and a specific quantity of expanded compound, a predetermined number of cores are coated rapidly and gently by circulation in a container with a specific quantity of the mixture, the cores being poured into the container and partial quantities of the mixture and partial quantities of a moisturizer being alternately fed in a metered fashion into the container, the number of seeds and the quantity of expanded compound being co-ordinated to one another in the mixture in such a way that the seeds, in a condition embedded in expanded compound, are deposited on the cores, and the pellets thus obtained are dried, characterised in that predetermined uniform numbers of seeds per granule are deposited in a strongly-adhering manner on the cores in such a way that cores with surfaces are used which have sufficiently large quantities and/or large sizes of pores or crevices, and in that the cores are selected and/or manufactured and/or pre-treated taking into account the properties of the seeds.

2. Method according to claim 1, characterised in that the number of seeds and the quantity of expanded compound are coordinated with one another in such a way that the outer surfaces of the seeds remain exposed in the embedded condition.

3. Method according to claim 1 or 2, characterised in that the pre-treatment of the cores is effected by disinfection or sterilisation before coating.

4. Method according to one of claims 1 to 3, characterised in that the manufacture of the cores is such that their shape is adapted to the shape of the seeds.

5. Method according to one of claims 1 to 4, characterised in that the cores are manufactured by comminution and fractionation.

6. Method according to one of claims 1 to 5, characterised in that the pre-treatment of the cores is effected by coating with an enveloping compound if necessary mixed with a binder.

7. Method according to one of claims 1 to 6, characterised in that the metered addition of the partial quantities is so selected in dependence on the container size and the circulation speed that a uniform circulation of the compound is obtained during the entire coating process.

8. Method according to one of claims 1 to 7, characterised in that the quantity of expanded compound in the mixture is so selected that the seeds during coating are only partially embedded, and that thereafter further partial quantities of expanded compound and moisturizer are alternately applied.

9. Method according to one of claims 1 to 8, characterized in that a binding agent is added to the expanded compound and/or the moisturiser.

10. Method according to one of claims 1 to 9, characterised in that the pelletised seed after coating is transferred for drying preferably into a fluidised bed drier and at a gentle temperature of for example 25°C is dried until, with stable hardening of its coating and shape, a reduction of its moisture to the original content of the seeds or less is effected.

11. Method according to one of claims 1 to 10, characterised in that the preferred seeds of the pelletised seed originate from the following list:

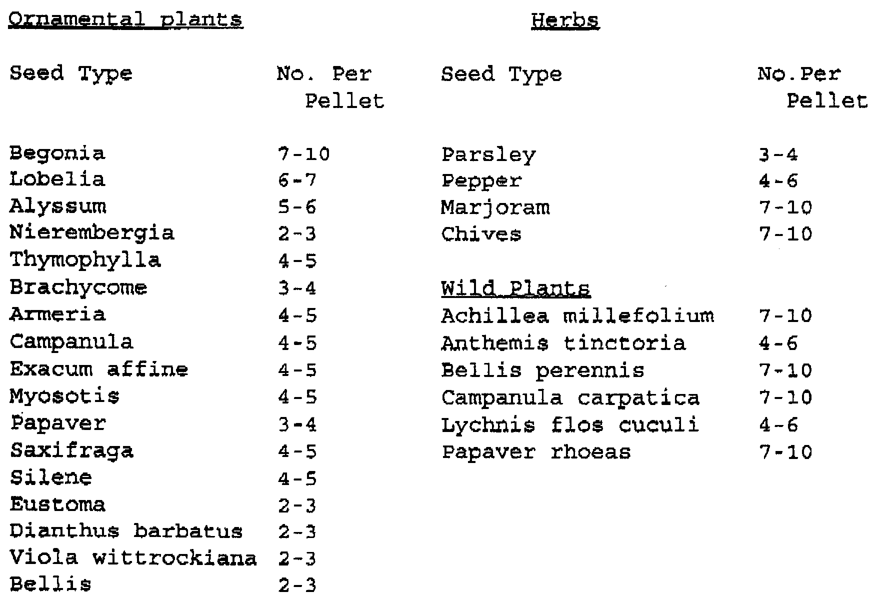

12. Pelletised seed with a number of seeds per granule consisting of cores and seeds, which are embedded in an expanded compound adhering to the surface of the core, characterised in that the cores are selected and/or manufactured and/or pretreated taking into account the properties of the seeds, and their surfaces have so many and/or such large pores or crevices that a predetermined uniform number of seeds is deposited in a securely-adhering manner on the cores.

13. Seed according to claim 12, characterised in that the seeds are embedded in the expanded material in such a way that their outer surfaces remain exposed.

14. Seed according to claim 12 to 13, characterised in that the shape of the cores is adapted to the shape of the seeds.

15. Seed according to one of claims 12 to 14, characterised in that cores are coated with an enveloping compound.

## Revendications

1. Procédé de fabrication de semences enrobées comportant un certain nombre de semences par grain, dans lequel un mélange homogène d'un nombre déterminé de semences et d'une quantité déterminée de masse de charge est réalisé, un nombre prédéterminé de noyaux étant enrobé de manière rapide et ménagée avec une quantité déterminée du mélange par circulation dans un récipient, les noyaux étant chargés dans le récipient et alternativement des quantités partielles du mélange et des quantités partielles d'un agent humidifiant étant fournies d'une manière dosée dans le récipient, le nombre des semences et la quantité de la masse de charge étant mutuellement accordés dans le mélange de façon que les semences soient fixées sur les noyaux dans un état noyé dans la masse de charge, les granules ainsi obtenus étant séchés, caractérisé en ce que des nombres homogènes, prédéterminés de semences par grain sont ainsi fixés sur les noyaux d'une manière résistant à l'enlèvement, en ce que l'on utilise des noyaux ayant des surfaces qui présentent des pores ou crevasses suffisamment nombreux et/ou grands et en ce que les noyaux sont sélectionnés et/ou préparés et/ou prétraités en tenant compte des propriétés des semences.

2. Procédé suivant la revendication 1, caractérisé en ce que le nombre des semences et la quantité de la masse de charge sont accordées l'une à l'autre de façon que les surfaces extérieures des semences restent libres à l'état noyé.

3. Procédé suivant l'une des revendications 1 et 2, caractérisé en ce que le prétraitement des noyaux s'effectue par désinfection ou stérilisation avant l'enrobage.

4. Procédé suivant l'une des revendications 1 à 3, caractérisé en ce que la préparation des noyaux s'effectue de façon que leur forme soit adaptée à la forme des semences.

5. Procédé suivant l'une des revendications 1 à 4, caractérisé en ce que la préparation des noyaux s'effectue par broyage et fractionnement.

6. Procédé suivant l'une des revendications 1 à 5, caractérisé en ce que le prétraitement des noyaux a lieu par revêtement avec une masse d'enveloppe éventuellement additionnée d'un liant.

7. Procédé suivant l'une des revendications 1 à 6, caractérisé en ce que le dosage des quantités partielles est choisi en fonction de la grandeur du récipient et de la vitesse de circulation de façon que, pendant la totalité de l'enrobage, on obtienne une circulation uniforme de la masse.

8. Procédé suivant l'une des revendications 1 à 7, caractérisé en ce que la quantité de masse de charge dans le mélange est choisie de façon que les semences ne soient noyées que partiellement pendant l'enrobage et en ce qu'ensuite alternativement des quantités partielles supplémentaires de masse de charge et d'agent humidifiant sont appliquées.

9. Procédé suivant l'une des revendications 1 à 8, caractérisé en ce qu'un liant est ajouté à la masse de charge et/ou à l'agent humidifiant.

10. Procédé suivant l'une des revendications 1 à 9, caractérisé en ce que la semence enrobée est, après l'enrobage, avantageusement transvasée pour le séchage dans un séchoir à lit fluidisé et est séchée à une température modérée de par exemple 25°C suffisamment longtemps pour obtenir une réduction de son humidité à la teneur initiale des semences ou moins, avec un durcissement stable de son enrobage et de sa forme.

11. Procédé suivant l'une des revendications 1 à 10, caractérisé en ce que les semences préférées des semences enrobées proviennent de la liste suivante :

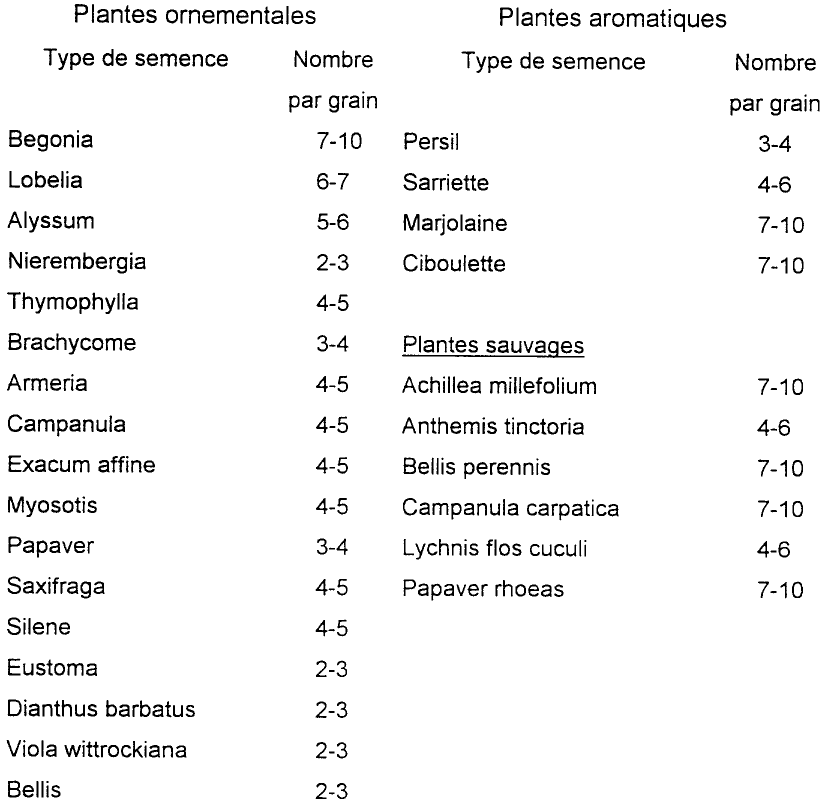

12. Semences enrobées comprenant un certain nombre de semences par grain, constituées de noyaux et de semences qui sont noyés dans une masse de charge adhérant à la surface des noyaux, caractérisées en ce que les noyaux sont sélectionnés et/ou préparés et/ou prétraités en tenant compte des propriétés des semences et en ce que leurs surfaces présentent des pores ou crevasses suffisamment nombreux et/ou grands pour qu'un nombre homogène, prédéterminé, de semences soit fixé sur les noyaux d'une manière résistant à l'enlèvement.

13. Semences suivant la revendication 12, caractérisées en ce que les semences sont noyées dans la masse de charge de façon que leurs surfaces extérieures restent libres.

14. Semences suivant l'une des revendications 12 et 13, caractérisées en ce que la forme des noyaux est adaptée à la forme des semences.

15. Semences suivant l'une des revendications 12 à 14, caractérisées en ce que les noyaux sont revêtus d'une masse d'enveloppe.
